# EUROPEAN PATENT APPLICATION

(11) **EP 4 813 500 A1**
(43) Date of publication of application: **30.09.2026**
(21) Application number: 25166884.4
(22) Date of filing: 28.03.2025
(51) Int. Cl.: B01D 53/047, H01M 8/04089, H01M 8/0662

(54) **HYDROGEN CONCENTRATOR, FUEL CELL SYSTEM AND METHOD FOR CONCENTRATING HYDROGEN**

(71) Applicant: AVL Powertrain UK Ltd., Basildon, Essex SS15 6LN (GB); AVL List GmbH, 8020 Graz (AT)
(72) Inventor: CAINE, Jon, Basildon, SS15 6LN (GB); VARNAVIDES, Andreas, Basildon, SS15 6LN (GB); SANDA, Swamy, Basildon, SS15 6LN (GB); SCHENK, Alexander, 8580 Köflach (AT)
(74) Representative: Gamper, Bettina

(57) **Abstract**

The invention is related to a hydrogen concentrator (100) of a fuel cell system (200) for concentrating hydrogen of a recirculation gas (RG) being recirculated of an anode exhaust gas (AEG) from an anode section (220) of a fuel cell stack (210) of the fuel cell system (200) by nitrogen sorption. The hydrogen concentrator (100) comprises a recirculation path (10) for conducting the recirculation gas (RG), wherein the recirculation path (10) comprises a recirculation path inlet (22) which is connectable to an anode discharge section (224) of the anode section (220) and a recirculation path outlet (24) which is connectable to an anode supply section (222) of the anode section (220), and at least one sorption device (12) arranged in the recirculation path (10) for sorption of nitrogen in the recirculation gas (RG).

## Description

The present invention is related to a hydrogen concentrator of a fuel cell system for concentrating hydrogen of a recirculation gas by nitrogen sorption, a fuel cell system for the generation of electric current comprising such a hydrogen concentrator and a method for concentrating hydrogen of a recirculation gas by nitrogen sorption.

It is known that the membrane of a PEM (Proton Exchange Membrane) fuel cell system can have a small leakage so that air can migrate from the cathode section to the anode section. The oxygen of the air will combine with hydrogen and form water (which must be separated from the hydrogen in a water separator). The nitrogen of the air remains in the anode section diluting the hydrogen until the efficiency drops to the point where the anode section is purged to remove the nitrogen. That means the anode exhaust gas of the anode section of the fuel cell stack of the fuel cell system is released. Thus, also some hydrogen loss occurs when the anode section is purged.

Therefore, the need to purge the nitrogen from the anode section also wastes the hydrogen that has become diluted. The amount of hydrogen wasted reduces the efficiency of the fuel cell system. Hydrogen is also a greenhouse gas so any emissions should be avoided where possible.

It is an object of the present invention to overcome the disadvantages described above at least partly. It is an object of the present invention to provide a solution that nitrogen from the anode section of a fuel cell stack of a fuel cell system can be concentrated and released during the purge event of the anode section while the hydrogen is not wasted but kept in the fuel cell system.

Aforesaid problem is solved by a hydrogen concentrator with the features of claim 1, by a fuel cell system with the features of claim 9 and by a method for concentrating hydrogen with the features of claim 10. Further features and details of the invention result from the subclaims, the description and the drawings. Features and details described in connection with the hydrogen concentrator according to the invention naturally also apply in connection with the fuel cell system according to the invention as well as with the method for concentrating hydrogen according to the invention, and vice versa in each case, so that reference is or can always be made mutually with regard to the disclosure concerning the individual aspects of the invention.

According to the present invention a hydrogen concentrator of a fuel cell system is described. The hydrogen concentrator can be used for concentrating hydrogen of a recirculation gas being recirculated of an anode exhaust gas from an anode section of a fuel cell stack of the fuel cell system by nitrogen sorption. The hydrogen concentrator comprises a recirculation path for conducting the recirculation gas and at least one sorption device arranged in the recirculation path for sorption of nitrogen in the recirculation gas. Further, the recirculation path comprises a recirculation path inlet which is connectable to an anode discharge section of the anode section and a recirculation path outlet which is connectable to an anode supply section of the anode section.

In order to increase the concentration of hydrogen in the recirculation gas which is diverted from the anode exhaust gas from the anode section of the fuel cell stack of the fuel cell system the sorption device collects the nitrogen out of the recirculation gas. The present invention can use adsorber technology to purify the hydrogen in the recirculation path of the hydrogen concentrator.

The meaning of sorption can be adsorption or absorption. Adsorption can mean the adhesion of for example nitrogen to a surface. Adsorption creates a film of the adsorbate on the surface of the adsorbent. This process differs from absorption, in which for example nitrogen (the absorbate) is dissolved by or permeates the absorbent. While adsorption does often precede absorption, which involves the transfer of the absorbate into the volume of the absorbent material, alternatively, adsorption is distinctly a surface phenomenon, wherein the adsorbate does not penetrate through the material surface and into the bulk of the adsorbent. The term sorption encompasses both adsorption and absorption.

The operating pressure of the hydrogen concentrator can be used to activate the adsorber of the at least one sorption device. The adsorber will capture the nitrogen at higher pressure and releases the nitrogen at lower pressure. The pressures involved are the operating pressure of the hydrogen concentrator and the atmospheric pressure.

That the recirculation path inlet is connectable to the anode discharge section can have the meaning that the recirculation path inlet is used for the intake of anode exhaust gas from the anode discharge section. Further, that the recirculation path outlet is connectable to the anode supply section can have the meaning that the recirculation path outlet is used for the transfer of the recirculation gas to the anode supply section.

The at least one sorption device can comprise a reversable chemical adsorber for adsorbing nitrogen. The reversable chemical adsorber for adsorbing nitrogen can adsorb the nitrogen at higher pressure and releases the nitrogen at lower pressure and is therefore reversable. Further, the nitrogen can be concentrated by the reversable chemical adsorber during the purge event of the anode section of the fuel cell stack of the fuel cell system.

According to an aspect of the hydrogen concentrator the at least one sorption device comprises a zeolite adsorber for adsorbing nitrogen. A zeolite adsorber can comprise a group of several microporous, crystalline aluminosilicate minerals which can be used as adsorbents. The zeolite adsorber can comprise silicon, aluminium and oxygen. Further, the zeolite adsorber can have a microporous structure.

The nitrogen can be adsorbed from the zeolite adsorber at a higher pressure in the range of 2 to 4 bar. When the pressure is back to atmospheric pressure the zeolite adsorber releases the nitrogen.

Further, the zeolite adsorber is suitable for not releasing any dust or contaminants into the recirculation gas. Furthermore, the zeolite adsorber is suitable to trap the trace nitrogen to allow circulation of near pure hydrogen in the recirculation path behind the zeolite adsorber.

According to a further aspect of the hydrogen concentrator the recirculation path comprises a first path and a second path, wherein the at least one sorption device is arranged in the first path, wherein the first path and the second path are parallel to each other, and wherein a first path blocking valve is arranged in the first path and a second path blocking valve is arranged in the second path.

It is possible to use a sorption device in only one of the two paths of the recirculation path. This means the mode of operation is discontinuous because when the sorption device is purged no concentration of hydrogen is possible during the time of purging the sorption device.

That the sorption device is arranged in the first path has the meaning that the recirculation gas flowing through the first path also flows through the sorption device.

The term parallel does not necessarily mean geometrically parallel. For example, that the first path and the second path are parallel to each other can have the meaning that there are pipes for the first path and that there are pipes for the second path and that the pipes of the first path and the pipes of the second path have the same start point and the same end point. Therefore, principally with open valves the recirculation gas can be divided between the first path and the second path. There is no need that the pipes of the first path and the pipes of the second path are running parallel to each other from a geometric point of view.

The first path blocking valve and the second path blocking valve are used to block the respective streams of recirculation gas through the first or second path. A closed first path blocking valve blocks the flow of the recirculation gas through the first path. A closed second path blocking valve blocks the flow of the recirculation gas through the second path.

The first path blocking valve can be arranged before the sorption device in the normal flow direction of the recirculation gas. The normal flow direction of the recirculation gas is the direction from the recirculation path inlet to the recirculation path outlet.

According to a further aspect of the hydrogen concentrator the recirculation path comprises a first path backflow valve for blocking a backflow of gas in the first path in the backflow direction towards the at least one sorption device. The first path backflow valve can block the backflow of gas in the backflow direction. The backflow direction is the opposite direction than the normal flow direction. Further, the first path backflow valve can be arranged behind the sorption device in the normal flow direction.

According to a further aspect of the hydrogen concentrator the recirculation path comprises a first path purge valve for removing nitrogen from the at least one sorption device and the first path. Advantageously, when the first path blocking valve and the first path backflow valve are closed and the first path purge valve is opened nitrogen which is released from the zeolite adsorber of the at least one sorption device can be removed from the first path through the open first path purge valve.

According to a further aspect of the hydrogen concentrator the valves (A1, B1, A2, PA) are combined to one or more combined valves. For example, the first path blocking valve and the second path blocking valve can be combined to a combined valve. As another example the first path blocking valve and the first path purge valve can be combined to a combined valve. As a further example the first path blocking valve, the second path blocking valve and the first path purge valve can be combined to a combined valve. As another example the first path blocking valve, the second path blocking valve, the first path purge valve and the first path backflow valve can be combined to a combined valve. As an alternative or additionally all mentioned valves can be check valves. Or any of the combinations of valves can be a check valve.

According to a further aspect of the hydrogen concentrator the hydrogen concentrator comprises at least a second sorption device which is arranged in the second path. Advantageously, there can be at least one sorption device in the first path and at least one sorption device in the second path of the recirculation path. That means there are two parallel paths for the recirculation gas from the anode side of the fuel cell. If the zeolite adsorber of the sorption device is purged in one of the two paths then the recirculation gas can still flow through the zeolite adsorber of the sorption device in the other path. Therefore, with at least two sorption devices in at least two different parallel paths of the recirculation path a near continuous removal of nitrogen and a near continuous increase of the hydrogen concentration in the recirculation path is possible. That the paths are parallel means that they have the same start and end point. However, parallel does not mean that they have to be geometrically parallel.

The recirculation path can comprise a second path backflow valve for blocking a backflow of gas in the second path in the backflow direction towards the second sorption device. Further, the recirculation path can comprise a second path purge valve for removing nitrogen from the at least one second sorption device and the second path. Also, the valves in the first path and/or the second path of the recirculation path can be combined to one or more combined valves. All single valves or combined valves can be check valves.

According to a further aspect of the hydrogen concentrator the at least one sorption device comprises a water separator. Advantageously, the water separator can be incorporated into the zeolite adsorber. Zeolites can adsorb water and other pollutants which may cause deterioration of the zeolite adsorber over time. This needs to be considered as part of the design and for example a heater may be required to dehumidify the zeolite adsorber.

As an alternative a water separator is arranged separately from the at least one sorption device in the first path of the recirculation path.

As a further alternative also a sorption device in the second path can comprise a water separator. In contrast thereto a water separator can be arranged separately from the sorption device of the second path.

Further, according to the present invention a fuel cell system for the generation of electric current is described. The fuel cell system comprises a fuel cell stack and a hydrogen concentrator according to the present invention. The fuel cell stack comprises an anode section and a cathode section, wherein the anode section comprises an anode supply section for the supply with anode supply gas and an anode discharge section for the discharge of anode exhaust gas.

The fuel cell system comprises the hydrogen concentrator according to the present invention. Therefore, the fuel cell system according to the present invention can have the same advantages as described in detail with the hydrogen concentrator according to the present invention. The fuel cell system can be a PEM (Proton Exchange Membrane) fuel cell system.

Further, according to the present invention a method for concentrating hydrogen of a recirculation gas being recirculated of an anode exhaust gas from an anode section of a fuel cell stack of a fuel cell system by nitrogen sorption is described. The method for concentrating hydrogen comprises the following steps:
Conducting the recirculation gas through a recirculation path from a recirculation path inlet which is connected to an anode discharge section of the anode section to a recirculation path outlet which is connected to an anode supply section of the anode section, and
removing nitrogen from the recirculation gas with at least one sorption device arranged in the recirculation path.

The recirculation gas comprises hydrogen and nitrogen. By removing nitrogen from the recirculation gas the concentration of hydrogen in the recirculation gas is increased. The sorption device can comprise a zeolite adsorber for adsorbing nitrogen.

The method can be performed with a hydrogen concentrator according to the present invention. Therefore, the method according to the present invention can have the same advantages as described in detail with the hydrogen concentrator according to the present invention.

According to an aspect of the method the nitrogen is adsorbed into a zeolite adsorber of the at least one sorption device at an operating pressure in the range between 2 bar and 4 bar. Preferably the operating pressure is in the range between 2.4 bar and 3.6 bar and more preferably in the range between 2.8 bar and 3.2 bar.

According to a further aspect of the method the at least one sorption device comprising the zeolite adsorber can be isolated by a first path blocking valve to prevent the recirculation gas to flow through the at least one sorption device and the at least one sorption device comprising the zeolite adsorber can be purged to an exhaust gas at atmospheric pressure.

Advantageously, the adsorber releases the nitrogen at atmospheric pressure. When a part of the recirculation path is connected to an exhaust path the pressure of this part of the recirculation path will drop to atmospheric pressure. At the atmospheric pressure of approximately 1 bar the zeolite adsorber can release the nitrogen. Therefore, the zeolite adsorber can be purged at the atmospheric pressure.

According to a further aspect of the method purging the at least one sorption device comprises a backflow of nitrogen in the recirculation path. A small backflow of nitrogen in the recirculation path is allowed to complete the purge of the zeolite adsorber of the at least one sorption device.

According to a further aspect of the method repressurising a part of the recirculation path comprising the at least one sorption device is done by keeping the pressure variation of the recirculation path below 15%. To keep the pressure variation of the recirculation path below 15% means that repressurising the first path of the recirculation path comprising the at least one sorption device does not lead to a drop of pressure by more than 15% of the pressure of the recirculation path before repressurising the first path. Alternatively, the pressure variation of the recirculation path can also be below 10%, 5% or 1%.

After the purge of the zeolite adsorber the zeolite adsorber is fully connected to the recirculation path again and the recirculation gas of the anode side of the fuel cell stack is now diverted again through the zeolite adsorber to restart concentrating hydrogen again.

According to a further aspect of the method the recirculation path comprises a first path and a second path, wherein the at least one sorption device is arranged in the first path and at least a second sorption device is arranged in the second path, and wherein the recirculation gas is conducted through the first path and/or through the second path.

Advantageously, the path where no recirculation gas is conducted at a time can be purged. Especially, the path can then have an atmospheric pressure and the sorption device comprising the zeolite adsorber can release the nitrogen to the exhaust gas.

Further advantages, features and details of the invention will be apparent from the following description, in which embodiments of the invention are described in detail with reference to the drawings. Those drawings show:
- Figure 1: a schematic view of a fuel cell system according to an embodiment of the invention,
- Figure 2: a schematic view of a hydrogen concentrator according to an embodiment of the invention,
- Figures 3a to 3f: schematic views of different steps for concentrating hydrogen with the hydrogen concentrator from Fig. 2,
- Figure 4: a graph for displaying the pressure of the first path, the nitrogen concentration of the zeolite adsorber in the first path, the pressure of the hydrogen concentrator and the nitrogen concentration of the hydrogen concentrator against the time,
- Figure 5: a schematic view of a hydrogen concentrator according to a further embodiment of the invention,
- Figure 6a to 6f: schematic views of different steps for concentrating hydrogen with the hydrogen concentrator from Fig. 5, and
- Figure 7: a graph for displaying the pressure of the first path, the nitrogen concentration of the zeolite adsorber in the first path, the pressure of the second path, and the nitrogen concentration of the zeolite adsorber in the second path against the time.

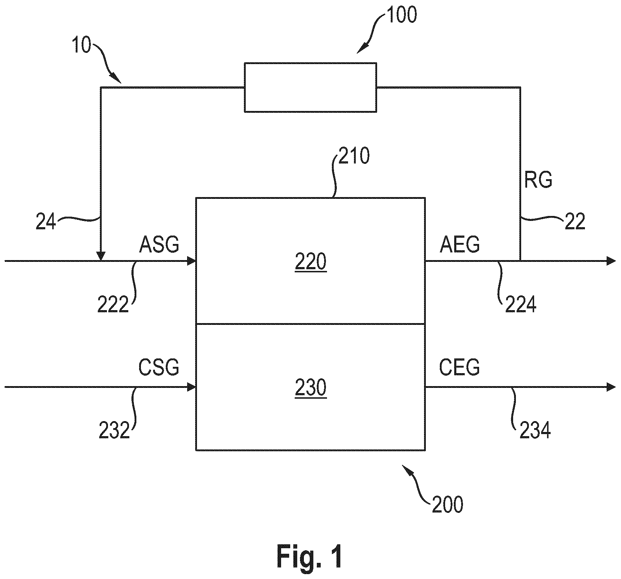

Fig. 1 shows a schematic view of a fuel cell system 200 according to an embodiment of the invention. The fuel cell system 200 can be used for the generation of electric current. The fuel cell system 200 comprises a fuel cell stack 210 and a hydrogen concentrator 100. As can be seen in Fig. 1 the fuel cell stack 210 comprises an anode section 220 and a cathode section 230. The anode section 220 comprises an anode supply section 222 for the supply with anode supply gas ASG and an anode discharge section 224 for the discharge of anode exhaust gas AEG. The cathode section 230 comprises a cathode supply section 232 for the supply with cathode supply gas CSG and a cathode discharge section 234 for the discharge of cathode exhaust gas CEG.

The hydrogen concentrator 100 is used for concentrating hydrogen of a recirculation gas RG being recirculated of the anode exhaust gas AEG from the anode section 220 by nitrogen sorption. The hydrogen concentrator 100 comprises a recirculation path 10 for conducting the recirculation gas RG and at least one sorption device for sorption of nitrogen in the recirculation gas RG. The recirculation path 10 comprises a recirculation path inlet 22 which is connected to the anode discharge section 224 of the anode section 220 and a recirculation path outlet 24 which is connected to the anode supply section 222 of the anode section 220.

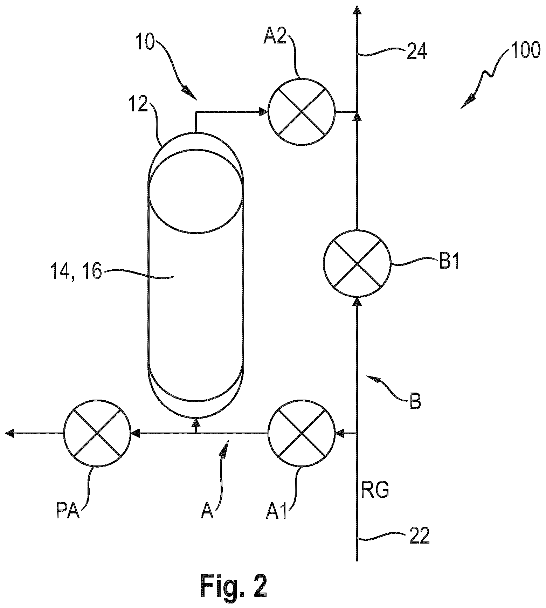

Fig. 2 shows a schematic view of a hydrogen concentrator 100 according to an embodiment of the invention. The hydrogen concentrator 100 comprises the recirculation path 10 having a recirculation path inlet 22 and a recirculation path outlet 24. The recirculation path 10 is divided in a first path A and a second path B. A reversable chemical adsorber 14 especially a sorption device 12 is arranged in the first path A. The first path A and the second path B are parallel to each other which means that the first path A and the second path B have the same start point and end point. The first path A and the second path B do not have to be geometrically parallel. Further, a first path blocking valve A1 is arranged in the first path A and a second path blocking valve B1 is arranged in the second path B. Furthermore, in Fig. 2 a first path purge valve PA and a first path backflow valve A2 can be seen.

The sorption device 12 can comprise a zeolite adsorber 16 for adsorbing nitrogen. When the nitrogen is adsorbed the concentration of hydrogen increases in the recirculation gas RG. The first path backflow valve A2 can be arranged in the recirculation path 10 and can be used for blocking a backflow of gas in the first path A in the backflow direction towards the sorption device 12.

The first path purge valve PA can be used for removing nitrogen from the at least one sorption device 12 and the first path A. Further, the first path blocking valve A1, the second path blocking valve B1, the first path backflow valve A2 and the first path purge valve PA can be combined to one or more combined valves.

Additionally, the sorption device 12 can comprise a water separator. In an alternative the recirculation path 10 can comprise a separate water separator.

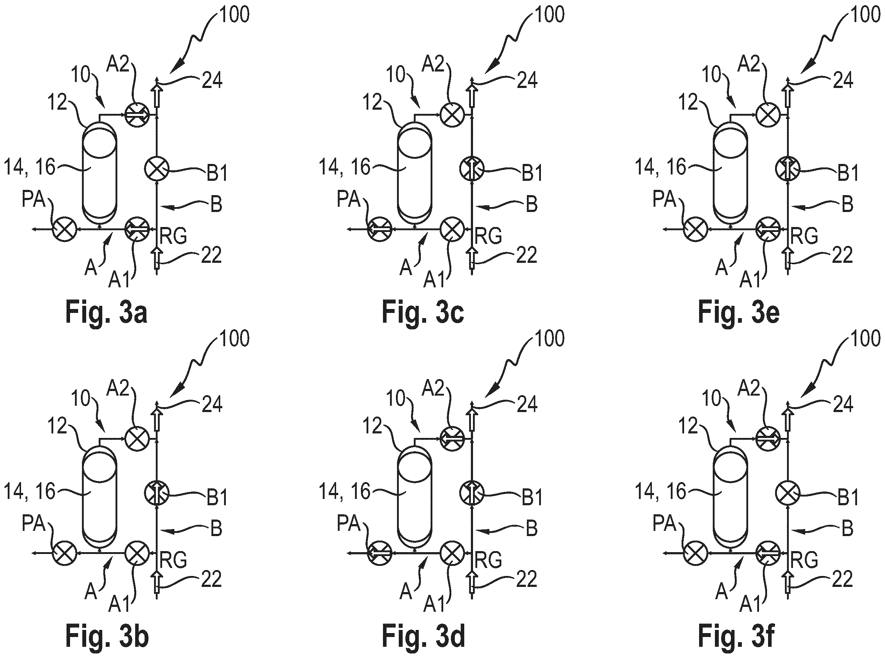

In Figs. 3a to 3f schematic views of different steps for concentrating hydrogen with the hydrogen concentrator 100 from Fig. 2 can be seen. The arrows in Figs. 3a to 3f indicate the flow direction of the gas. Figs. 3a to 3f show different steps of an embodiment of a method for concentrating hydrogen of the recirculation gas RG by nitrogen sorption. The recirculation gas RG is recirculated of the anode exhaust gas AEG from the anode section 220 of the fuel cell stack 210 of the fuel cell system 200. Especially the recirculation gas RG is conducted through the recirculation path 10 from the recirculation path inlet 22 to the recirculation path outlet 24. The nitrogen is removed from the recirculation gas RG with the sorption device 12 which is arranged in the recirculation path 10.

Fig. 3a shows a running mode of the hydrogen concentrator 100. The second path blocking valve B1 and the first path purge valve PA are closed. The first path blocking valve A1 and the first path backflow valve A2 are open so that recirculation gas RG can flow through the sorption device 12. Especially at an operating pressure in the range between 2 bar and 4 bar the nitrogen of the recirculation gas RG can be adsorbed into the zeolite adsorber 16 of the sorption device 12. Therefore, the hydrogen concentration of the recirculation gas RG is increased.

Fig. 3b shows a closed first path blocking valve A1 and a closed first path backflow valve A2. The second path blocking valve B1 is now open so that the recirculation gas RG can flow through the second path B.

In Fig. 3c the purge of the zeolite adsorber 16 of the sorption device 12 is shown. The first path purge valve PA is now open so that the first path A has an atmospheric pressure. The sorption device 12 comprising the zeolite adsorber 16 is isolated by the first path blocking valve A1 to prevent the recirculation gas RG to flow through the sorption device 12. At the atmospheric pressure the nitrogen from the zeolite adsorber 16 can be purged to an exhaust gas.

Fig. 3d shows an optional backwash mode of the hydrogen concentrator 100. In the optional backwash mode the first path blocking valve A1 is closed whereas the first path purge valve PA and the second path blocking valve B1 are open. Also, the first path backflow valve A2 is open now so that a part of the recirculation gas RG can flow back in the first path A in the direction towards the first path purge valve PA and additionally wash the zeolite adsorber 16.

Fig. 3e shows repressurising the first path A of the recirculation path 10 comprising the sorption device 12. Thereto the first path purge valve PA is closed and the first path blocking valve A1 is opened. The repressurising of the first path A can be done by keeping the pressure variation of the recirculation path 10 below 15%.

Fig. 3f shows again the running mode of the hydrogen concentrator 100 as shown in Fig. 3a.

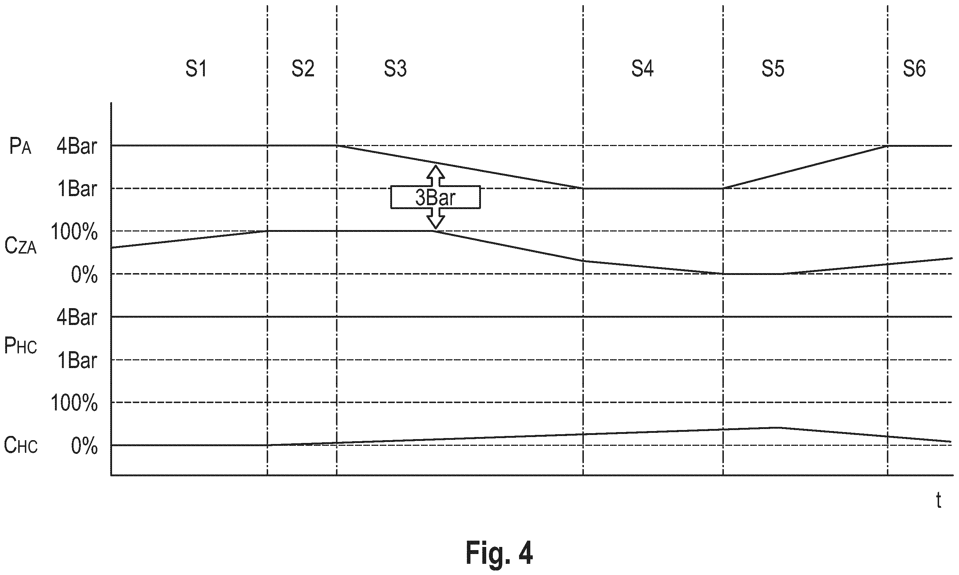

Fig. 4 shows a graph for displaying the pressure P_{A} of the first path A, the nitrogen concentration C_{ZA} of the zeolite adsorber 16 in the first path A, the pressure P_{HC} of the hydrogen concentrator 100 and the nitrogen concentration C_{HC} of the hydrogen concentrator 100 against the time t.

In a first step S1 the hydrogen concentrator 100 is in the running mode (compare Fig. 3a). As the zeolite adsorber 16 adsorbs the nitrogen from the recirculation gas RG the nitrogen concentration C_{ZA} of the zeolite adsorber 16 in the first path A increases with the time t.

In a second step S2 the flow of the recirculation gas RG is switched from the first path A to the second path B (compare Fig. 3b). Because no nitrogen is adsorbed anymore the nitrogen concentration C_{HC} of the hydrogen concentrator 100 starts to increase over time t.

In a third step S3 the first path purge valve PA is opened and the pressure P_{A} of the first path A starts to decrease (compare Fig. 3c). At a pressure of 3 bar the zeolite adsorber 16 starts to desorb. However, the exact pressure when the zeolite adsorber 16 starts to desorb can vary for example in a range from 2 bar to 4 bar. At this pressure the nitrogen concentration C_{ZA} of the zeolite adsorber 16 in the first path A starts to decrease.

In a fourth step S4 the optional backwash mode is shown (compare Fig. 3d). The nitrogen concentration C_{ZA} of the zeolite adsorber 16 in the first path A further decreases.

In a fifth step S5 the first path A of the recirculation path 10 is repressurised (compare Fig. 3e). The pressure P_{A} of the first path A starts to increase. At a pressure P_{A} of 3 bar the nitrogen concentration C_{ZA} of the zeolite adsorber 16 in the first path A starts to increase as the zeolite adsorber 16 starts to adsorb nitrogen again. Therefore, the nitrogen concentration C_{HC} of the hydrogen concentrator 100 starts to decrease.

In a sixth step S6 the hydrogen concentrator 100 is in the running mode again (compare Fig. 3f).

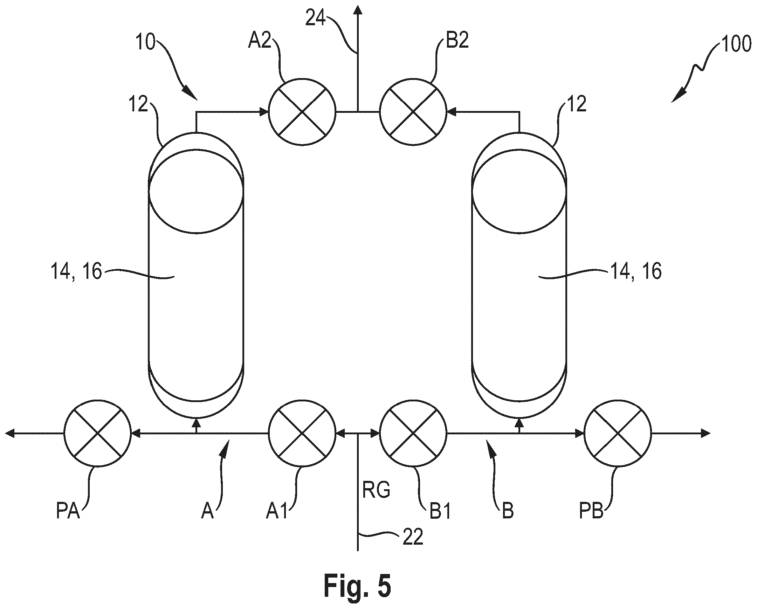

Fig. 5 shows a schematic view of a hydrogen concentrator 100 according to a further embodiment of the invention. In contrast to the hydrogen concentrator 100 as shown in Fig. 2 the hydrogen concentrator 100 as shown in Fig. 5 further comprises a second sorption device 12 which is arranged in the second path B. Furthermore, a second path backflow valve B2 and a second path purge valve PB are also arranged in the second path B. With the hydrogen concentrator 100 as shown in Fig. 5 a nearly continuous operation can be reached. That is because if one sorption device 12 is purged the other sorption device 12 can still be used.

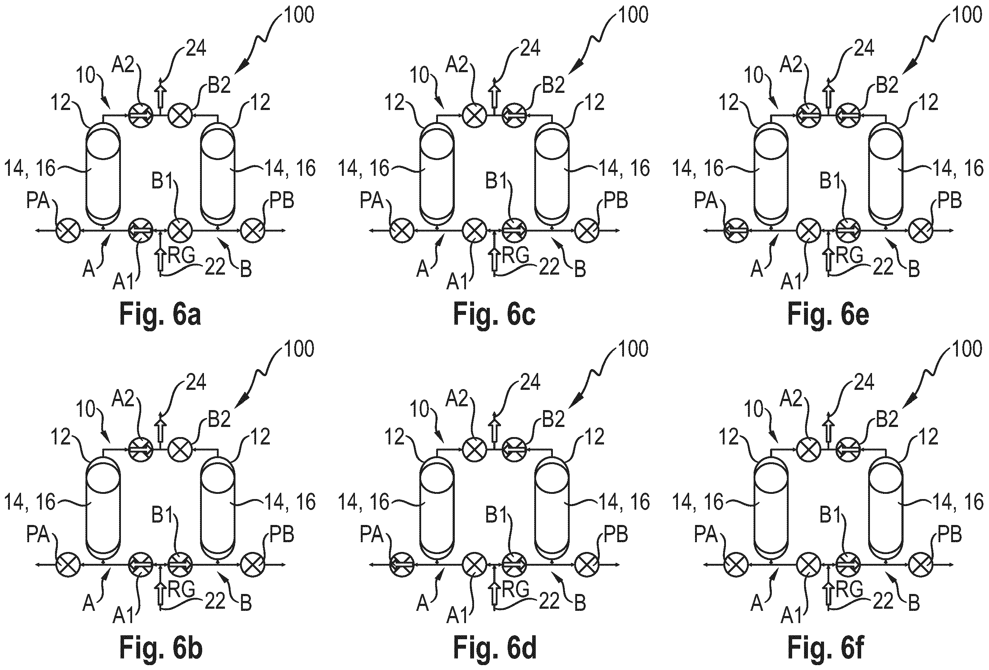

In Figs. 6a to 6f schematic views of different steps for concentrating hydrogen with the hydrogen concentrator 100 from Fig. 5 can be seen. The recirculation gas RG is conducted through the first path A and/or through the second path B.

Fig. 6a shows the running mode of the hydrogen concentrator 100 when the recirculation gas RG flows through the first path A. The second path blocking valve B1, the first path purge valve PA and the second path backflow valve B2 are closed. The first path blocking valve A1 and the first path backflow valve A2 are open so that recirculation gas RG can flow through the sorption device 12 of the first path A. Especially at an operating pressure in the range between 2 bar and 4 bar the nitrogen of the recirculation gas RG can be adsorbed into the zeolite adsorber 16 of the sorption device 12 of the first path A. Therefore, the hydrogen concentration of the recirculation gas RG is increased.

Fig. 6b shows an open first path blocking valve A1 and an open first path backflow valve A2. The second path blocking valve B1 is now open so that the recirculation gas RG can flow through the second path B and the pressure P_{B} of the second path B can build up to the pressure P_{HC} of the hydrogen concentrator 100.

Fig. 6c shows a closed first path blocking valve A1 and a closed first path backflow valve A2. The recirculation gas RG now flows through the second path B and through the sorption device 12 of the second path B.

In Fig. 6d the purge of the zeolite adsorber 16 of the sorption device 12 of the first path A is shown. The first path purge valve PA is now open so that the first path A has an atmospheric pressure. The sorption device 12 of the first path A comprising the zeolite adsorber 16 is isolated by the first path blocking valve A1 to prevent the recirculation gas RG to flow through the sorption device 12 of the first path A. At the atmospheric pressure the nitrogen from the zeolite adsorber 16 can be purged to an exhaust gas.

Fig. 6e shows an optional backwash mode for the first path A of the hydrogen concentrator 100. In the optional backwash mode the first path blocking valve A1 is closed whereas the first path purge valve PA is open. Also, the first path backflow valve A2 is open now so that a part of the recirculation gas RG from the second path B can flow back in the first path A in the direction towards the first path purge valve PA and additionally washes the zeolite adsorber 16 of the first path A.

Fig. 6f shows a similar running mode compared with the running mode of the hydrogen concentrator 100 as shown in Fig. 6a. However, as can be seen in Fig. 6f the recirculation gas RG flows through the second path B.

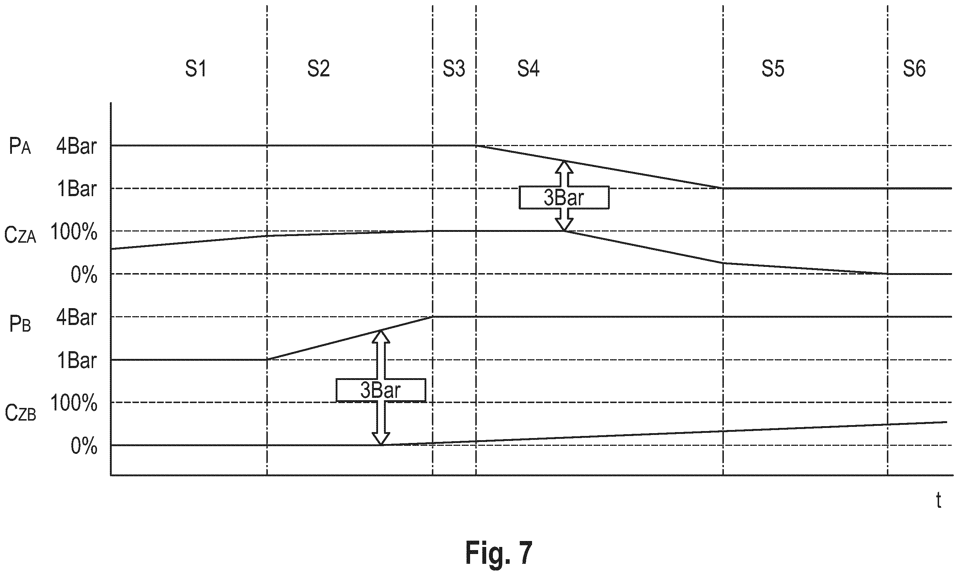

Fig. 7 shows a graph for displaying the pressure P_{A} of the first path A, the nitrogen concentration C_{ZA} of the zeolite adsorber 16 in the first path A, the pressure P_{B} of the second path B, and the nitrogen concentration C_{ZB} of the zeolite adsorber 16 in the second path B against the time t.

In a first step S1 the hydrogen concentrator 100 is in the running mode when the recirculation gas RG flows through the first path A (compare Fig. 6a). As the zeolite adsorber 16 adsorbs the nitrogen from the recirculation gas RG the nitrogen concentration C_{ZA} of the zeolite adsorber 16 in the first path A increases with the time t.

In a second step S2 the pressure P_{B} of the second path B is increased (compare Fig. 6b). At a pressure of 3 bar the zeolite adsorber 16 of the second path B starts to adsorb nitrogen. However, the exact pressure when the zeolite adsorber 16 starts to adsorb nitrogen can vary for example in a range from 2 bar to 4 bar. Therefore, the nitrogen concentration C_{ZB} of the zeolite adsorber 16 in the second path B starts to increase at this pressure.

In a third step S3 the flow of the recirculation gas RG is switched from the first path A to the second path B (compare Fig. 6c).

In a fourth step S4 the first path purge valve PA is opened and the pressure P_{A} of the first path A starts to decrease (compare Fig. 6d). At a pressure of 3 bar the zeolite adsorber 16 of the first path A starts to desorb. However, the exact pressure when the zeolite adsorber 16 starts to desorb can vary for example in a range from 2 bar to 4 bar. At this pressure the nitrogen concentration C_{ZA} of the zeolite adsorber 16 in the first path A starts to decrease.

In a fifth step S5 the optional backwash mode for the first path A is shown (compare Fig. 6e). The nitrogen concentration C_{ZA} of the zeolite adsorber 16 in the first path A further decreases.

In a sixth step S6 the hydrogen concentrator 100 is in the running mode when the recirculation gas RG flows through the second path B (compare Fig. 6f).

The above description of the drawings describes the present invention by way of example only.

### Reference signs

- 10: recirculation path
- 12: sorption device
- 14: reversable chemical adsorber
- 16: zeolite adsorber
- 22: recirculation path inlet
- 24: recirculation path outlet
- 100: hydrogen concentrator
- 200: fuel cell system
- 210: fuel cell stack
- 220: anode section
- 222: anode supply section
- 224: anode discharge section
- 230: cathode section
- 232: cathode supply section
- 234: cathode discharge section

- A: first path of the recirculation path
- A1: first path blocking valve
- A2: first path backflow valve
- PA: first path purge valve
- B: second path of the recirculation path
- B1: second path blocking valve
- B2: second path backflow valve
- PB: second path purge valve
- AEG: anode exhaust gas
- ASG: anode supply gas
- CEG: cathode exhaust gas
- CSG: cathode supply gas
- RG: recirculation gas
- t: time
- P_{A}: pressure of the first path
- C_{ZA}: nitrogen concentration of the zeolite adsorber in the first path
- P_{HC}: pressure of the hydrogen concentrator
- C_{HC}: nitrogen concentration of the hydrogen concentrator
- P_{B}: pressure of the second path
- C_{ZB}: nitrogen concentration of the zeolite adsorber in the second path

## Claims

1. Hydrogen concentrator (100) of a fuel cell system (200) for concentrating hydrogen of a recirculation gas (RG) being recirculated of an anode exhaust gas (AEG) from an anode section (220) of a fuel cell stack (210) of the fuel cell system (200) by nitrogen sorption, **characterised by**
a recirculation path (10) for conducting the recirculation gas (RG), wherein the recirculation path (10) comprises a recirculation path inlet (22) which is connectable to an anode discharge section (224) of the anode section (220) and a recirculation path outlet (24) which is connectable to an anode supply section (222) of the anode section (220), and
at least one sorption device (12) arranged in the recirculation path (10) for sorption of nitrogen in the recirculation gas (RG).

2. Hydrogen concentrator (100) according to claim 1, **characterised in that** the at least one sorption device (12) comprises a zeolite adsorber (16) for adsorbing nitrogen.

3. Hydrogen concentrator (100) according to claim 1 or 2, **characterised in that** the recirculation path (10) comprises a first path (A) and a second path (B), wherein the at least one sorption device (12) is arranged in the first path (A), wherein the first path (A) and the second path (B) are parallel to each other, and wherein a first path blocking valve (A1) is arranged in the first path (A) and a second path blocking valve (B1) is arranged in the second path (B).

4. Hydrogen concentrator (100) according to claim 3, **characterised in that** the recirculation path (10) comprises a first path backflow valve (A2) for blocking a backflow of gas in the first path (A) in the backflow direction towards the at least one sorption device (12).

5. Hydrogen concentrator (100) according to claim 3 or 4, **characterised in that** the recirculation path (10) comprises a first path purge valve (PA) for removing nitrogen from the at least one sorption device (12) and the first path (A).

6. Hydrogen concentrator (100) according to any of claims 3 to 5, **characterised in that** the valves (A1, B1, A2, PA) are combined to one or more combined valves.

7. Hydrogen concentrator (100) according to any of claims 3 to 6, **characterised in that** the hydrogen concentrator (100) comprises at least a second sorption device (12) which is arranged in the second path (B).

8. Hydrogen concentrator (100) according to any of the preceding claims, **characterised in that** the at least one sorption device (12) comprises a water separator.

9. Fuel cell system (200) for the generation of electric current, **characterised by** a fuel cell stack (210) and a hydrogen concentrator (100) according to any of claims 1 to 8, wherein the fuel cell stack (210) comprises an anode section (220) and a cathode section (230), and wherein the anode section (220) comprises an anode supply section (222) for the supply with anode supply gas (ASG) and an anode discharge section (224) for the discharge of anode exhaust gas (AEG).

10. Method for concentrating hydrogen of a recirculation gas (RG) being recirculated of an anode exhaust gas (AEG) from an anode section (220) of a fuel cell stack (210) of a fuel cell system (200) by nitrogen sorption, **characterised by** the following steps:
Conducting the recirculation gas (RG) through a recirculation path (10) from a recirculation path inlet (22) which is connected to an anode discharge section (224) of the anode section (220) to a recirculation path outlet (24) which is connected to an anode supply section (222) of the anode section (220), and
removing nitrogen from the recirculation gas (RG) with at least one sorption device (12) arranged in the recirculation path (10).

11. Method for concentrating hydrogen according to claim 10, **characterised in that** the nitrogen is adsorbed into a zeolite adsorber (16) of the at least one sorption device (12) at an operating pressure in the range between 2 bar and 4 bar.

12. Method for concentrating hydrogen according to claim 11, **characterised in that** the at least one sorption device (12) comprising the zeolite adsorber (16) can be isolated by a first path blocking valve (A1) to prevent the recirculation gas (RG) to flow through the at least one sorption device (12) and the at least one sorption device (12) comprising the zeolite adsorber (16) can be purged to an exhaust gas at atmospheric pressure.

13. Method for concentrating hydrogen according to any of claims 10 to 12, **characterised in that** purging the at least one sorption device (12) comprises a backflow of nitrogen in the recirculation path (10).

14. Method for concentrating hydrogen according to any of claims 10 to 13, **characterised in that** repressurising a part of the recirculation path (10) comprising the at least one sorption device (12) is done by keeping the pressure variation of the recirculation path (10) below 15%.

15. Method for concentrating hydrogen according to any of claims 10 to 14, **characterised in that** the recirculation path (10) comprises a first path (A) and a second path (B), wherein the at least one sorption device (12) is arranged in the first path (A) and at least a second sorption device (12) is arranged in the second path (B), and wherein the recirculation gas (RG) is conducted through the first path (A) and/or through the second path (B).
